# EUROPÄISCHE PATENTSCHRIFT

(11) **EP 3 383 633 B1**
(45) Veröffentlichungstag und Bekanntmachung des Hinweises auf die Patenterteilung: **06.10.2021**
(21) Anmeldenummer: 16757615.6
(22) Anmeldetag: 22.08.2016
(51) Int. Cl.: B29D 29/06, B29C 43/22, B29C 43/58, B29C 35/02, B29L 31/00, B30B 15/06, B30B 15/16

(54) **VERFAHREN UND VORRICHTUNG ZUR HERSTELLUNG EINES TRANSPORTBANDES**
METHOD AND DEVICE FOR PRODUCING A CONVEYOR BELT
PROCÉDÉ ET DISPOSITIF DE FABRICATION D'UNE BANDE TRANSPORTEUSE

(30) Priorität: 30.11.2015 DE 102015223796
(43) Veröffentlichungstag der Anmeldung: 10.10.2018
(73) Patentinhaber: ContiTech Transportbandsysteme GmbH, 30165 Hannover (DE)
(72) Erfinder: JUNGK, Andreas, 65719 Hofheim TS (DE); WIEGMANN, Florian, 30926 Seelze (DE)
(74) Vertreter: Continental Corporation
(86) Internationale Anmeldenummer: PCT/EP2016/069760
(87) Internationale Veröffentlichungsnummer: WO 2017/092888

(56) Entgegenhaltungen:
- EP-A2- 0 888 858
- WO-A1-2011/101410
- WO-A1-2012/070197
- DE-A1-102010 036 637
- GB-A- 903 591

## Beschreibung

Die Erfindung betrifft ein Verfahren zur Herstellung von Fördergurten in einer Vorrichtung mit einer Vulkanisationspresse mit einer Einlaufseite und einer Auslaufseite, wobei die Vulkanisationspresse ein Pressenoberteil und ein Pressenunterteil umfasst, wobei das Pressenoberteil und das Pressenunterteil jeweils eine Pressplatte aufweisen, die am jeweiligen Pressenteil befestigbar sind und planparallel zueinander angeordnet sind, wobei das Pressenoberteil gegen das Pressenunterteil senkrecht zur Plattenebene mittels einer Hubeinrichtung gegeneinander zu beabstanden ist.

Derartige Pressensysteme kommen bei der Herstellung von Flachfördergurten zum Einsatz. Das Pressenoberteil ist dabei zunächst gegenüber dem Pressenunterteil geöffnet, d.h. normal zur Plattenebene vom Pressenunterteil derart beabstandet, dass ein Fördergurtrohling zwischen die Pressplatten einfädelbar ist. Ein Beispiel für ein derartiges Pressensystem ist in der Patentanmeldeschrift EP 0 888 858 A2 offenbart.

Eine weitere Presse zum Pressen von Artikeln findet sich in der Patentschrift GB 903,591.

Ist die gesamte Ebene der Pressplatten mit dem Förderbandrohling bedeckt, wird dieser zwischen den Pressplatten an Pressenober- und unterteil zusammengepresst und vulkanisiert. Ist der Vulkanisationsprozess beendet, öffnet die Presse wieder und ein weiterer Abschnitt des Fördergurtes ist zwischen die Pressplatten einziehbar.

Da jedoch ein einfädeln des Gurtes immer nur dann notwendig ist, wenn ein neuer Fördergurt beginnt, ist eine vollständige Öffnung der Presse nicht jedes Mal nötig.

Der Erfindung liegt die Aufgabe zugrunde, ein Verfahren der eingangs geschilderten Art so zu verbessern, dass die Pressenöffnungszeiten minimiert und damit der Durchsatz der Presse optimiert ist.

Diese Aufgabe wird dadurch gelöst, dass das Verfahren folgende Arbeitsschritte umfasst, nämlich
a Prüfen, ob ein Fördergurtrohling zum Vulkanisieren in der Presse vorhanden ist und Übergabe der Information an eine Auswerte- und Steuereinheit,
b falls kein Fördergurtrohling zum Vulkanisieren in der Presse vorhanden ist, steuert die Steuereinheit die Hubeinrichtung so, dass die Presse vollständig geöffnet wird und ein Fördergurtrohling einfädelbar ist,
c falls ein Fördergurtrohling zum Vulkanisieren in der Presse vorhanden ist, steuert die Steuereinheit die Hubeinrichtung so, dass die Presse in eine vorbestimmte Betriebsöffnungsposition öffnet, wobei in der Betriebsöffnungsposition der Abstand der Pressplatten geringer ist, als bei vollständiger Öffnung der Presse,
d Einziehen des Fördergurtes in die Presse um eine vorbestimmte Länge
e Absenken des Pressenoberteils gegen das Unterteil mittels der Hubeinrichtung, dabei steuert die Steuerung den Verfahrweg in Abhängigkeit von der gemessenen Fördergurtrohlingsdicke,
f Vulkanisieren
g Prüfen, ob ein Fördergurtrohling zum Vulkanisieren in der Presse vorhanden ist und Übergabe der Information an die Auswerte- und Steuereinheit,
h falls ein Fördergurtrohling zum Vulkanisieren in der Presse vorhanden ist, wird das Verfahren bei Schritt c fortgesetzt
i falls kein Fördergurtrohling zum Vulkanisieren in der Presse vorhanden ist, steuert die Steuereinheit die Hubeinrichtung so, dass die Presse vollständig geöffnet wird, der fertig vulkanisierte Fördergurt wird entnommen, das Verfahren ist beendet und kann von Neuem beginnen.

Durch ein derartiges Verfahren ist es möglich, die Presse pro Arbeitshub nur so weit zu öffnen, dass ein Weitertransport des Fördergurtes durch die Pressplatten gerade eben möglich ist. Ein vollständiges Öffnen der Presse ist damit nur noch beim Einfädeln eines neuen Förderbandrohlings oder bei Wartungsarbeiten erforderlich.

Die Erfindung betrifft weiterhin eine Vorrichtung zur Durchführung des oben genannten Verfahrens nach Anspruch 2, wobei die Vorrichtung eine Vulkanisationspresse mit einem Pressenoberteil und einem Pressenunterteil umfasst, wobei das Pressenoberteil und das Pressenunterteil jeweils eine Pressplatte aufweisen, die am jeweiligen Pressenteil befestigbar sind und planparallel zueinander angeordnet sind, wurde wobei das Pressenoberteil gegen das Pressenunterteil senkrecht zur Plattenebene mittels einer Hubeinrichtung gegeneinander zu beabstanden sind.

Die zugrunde liegende Aufgabe ist, die Vorrichtung derart zu gestalten, dass die Durchführung des oben genannten Verfahrens möglich ist.

Nach Anspruch 2 wird die Aufgabe wird dadurch gelöst, dass die Vorrichtung eine Steuerung und Messmittel aufweist, wobei durch ein erstes und/oder ein zweites Messmittel prüfbar ist, ob ein Fördergurtrohling zum Vulkanisieren in der Presse vorhanden ist und durch ein oder mehrere weitere Messmittel der Abstand der Pressplatten der Vorrichtung zueinander messbar ist und durch die Steuerung die Meßsignale erfassbar sind, wobei durch die Steuerung die Hubvorrichtung derart ansteuerbar ist, dass mittels der Hubvorrichtung vorbestimmte Positionen der Pressplatten zueinander anfahrbar sind, wobei die vorbestimmten Positionen der Pressplatten voneinander verschieden, insbesondere eine vollständige Öffnung der Presse oder eine von der vollständigen Öffnung der Presse abweichende, kleinere Betriebsöffnung sein können.

Da eine derartige Vorrichtung bei handelsüblichen Pressen verhältnismäßig leicht nachrüstbar ist, lassen sich herkömmliche Vulkanisationspressen für das oben genannte Verfahren nutzen. Durch die geringen Abstände der Pressplatten beim Öffnen im Dauerbetrieb ist eine effektivere Nutzung der Pressen möglich.

In einer Weiterbildung der Erfindung weist die Steuerung mechanische Messmittel auf.

Mechanische Messmittel haben den Vorteil, dass sie meist einfach aufgebaut sind und gegebenenfalls direkt eine Ventilbetätigung zur Regelung der Pressenhydraulik ermöglichen.

In einer Weiterbildung der Erfindung weist die Steuerung optische Messmittel auf.

Optische Messmittel haben den Vorteil, dass sie genauer und berührungslos messen, so das ein mechanisches Spiel das Messergebnis nicht verfälscht.

Anhand der Zeichnung wird nachstehend ein Beispiel der Erfindung näher erläutert. Es zeigt:
- Fig. 1: ein Ablaufdiagramm des erfindungsgemäßen Verfahrens,
- Fig. 2: eine prinzipielle Darstellung einer erfindungsgemäßen Vorrichtung mit geschlossenem Pressenraum
- Fig. 3: eine prinzipielle Darstellung einer erfindungsgemäßen Vorrichtung mit betriebsoffenem Pressenraum
- Fig. 4: eine prinzipielle Darstellung einer erfindungsgemäßen Vorrichtung mit vollständig geöffnetem Pressenraum

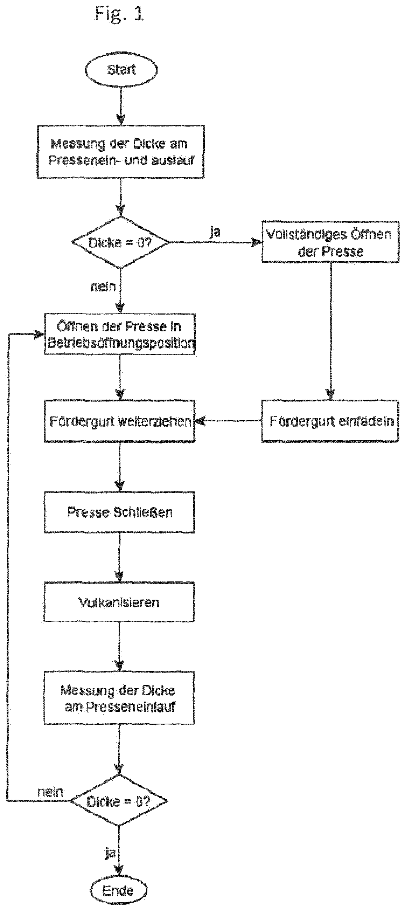

In Fig. 1 sind die Verfahrensschritte a - i in Kurzform zur besseren Verdeutlichung in einem schematischen Ablaufplan dargestellt.

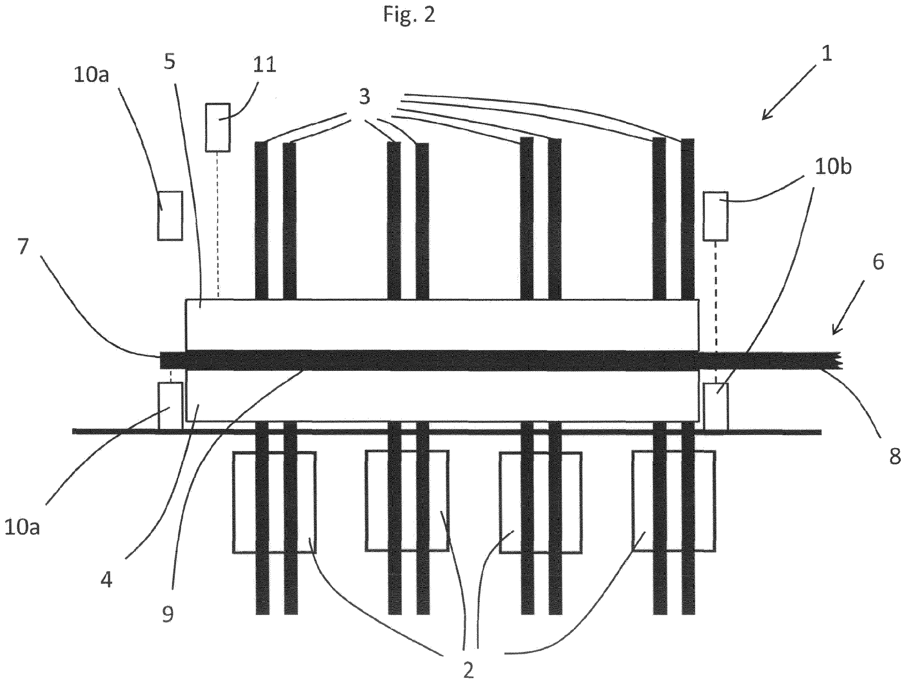

Die in der Fig. 2 gezeigte Vorrichtung weist eine Vulkanisationspresse 1 auf. Die Vulkanisationspresse 1 weist vier Hydraulikzylindereinheiten 2 mit je zwei Hydraulikzylindern 3 auf. Die Hydraulikzylindereinheiten 2 sind mit einer hier nicht gezeigten elektrischen Auswerte- und Steuereinheit elektrisch verbunden. Weiter weist die Presse 1 einen unteren Pressentisch 4 und ein Pressenoberteil 5 auf. Pressentisch 4 und Oberteil 5 sind planparallel zueinander angeordnet. Die Hydraulikzylinder 3 sind mit dem Pressenoberteil 5 verbunden. Zwischen dem Pressentisch 4 und dem Pressenoberteil 5 ist ein Fördergurt 6 angeordnet, der an einem ersten Teil 7 fertig vulkanisiert ist, an einem zweiten Teil 8 im Rohzustand ist und in einem dritten Teil 9 zwischen Pressentisch 4 und Pressenoberteil 5 eingespannt ist. Pressentisch 4 und Pressenoberteil 5 wirken hier vereinfachend dargestellt als Pressplatten und sind über eine hier nicht gezeigte Heizanlage aufheizbar. Zwischen den Pressplatten 4 und 5 ist der Fördergurt 6 im Bereich 9 auf bekannte Weise vulkanisierbar. Die näheren Einzelheiten zur Vulkanisation sind bekannt und daher hier aus Gründen der Vereinfachung nicht gezeigt.

Jedem Teil 7 und 8 des Fördergurtes 9 ist eine Lichtschranke 10a, 10b zugeordnet, die hier nur prinzipiell dargestellt sind. Die Lichtschranken 10a und 10b sind mit der hier nicht gezeigten elektrischen Steuereinheit verbunden. Über die Lichtschranken10a, 10b ist prüfbar, ob ein Fördergurtrohling 6, 8 zum Vulkanisieren in der Presse vorhanden ist. Die Lage des Pressenoberteils 5 ist über eine Abstandsmesseinrichtung 11 messbar.

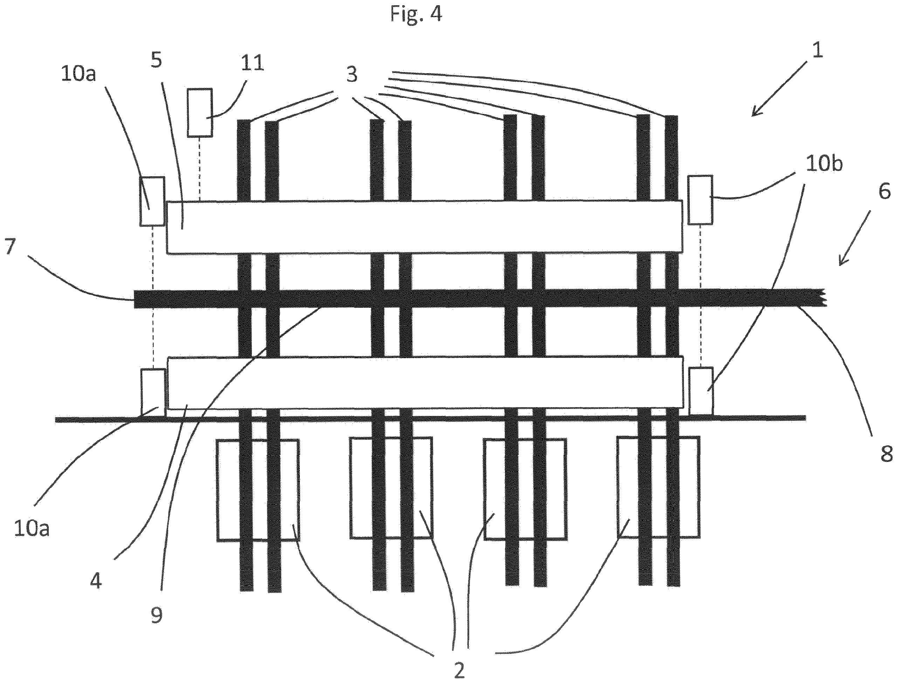

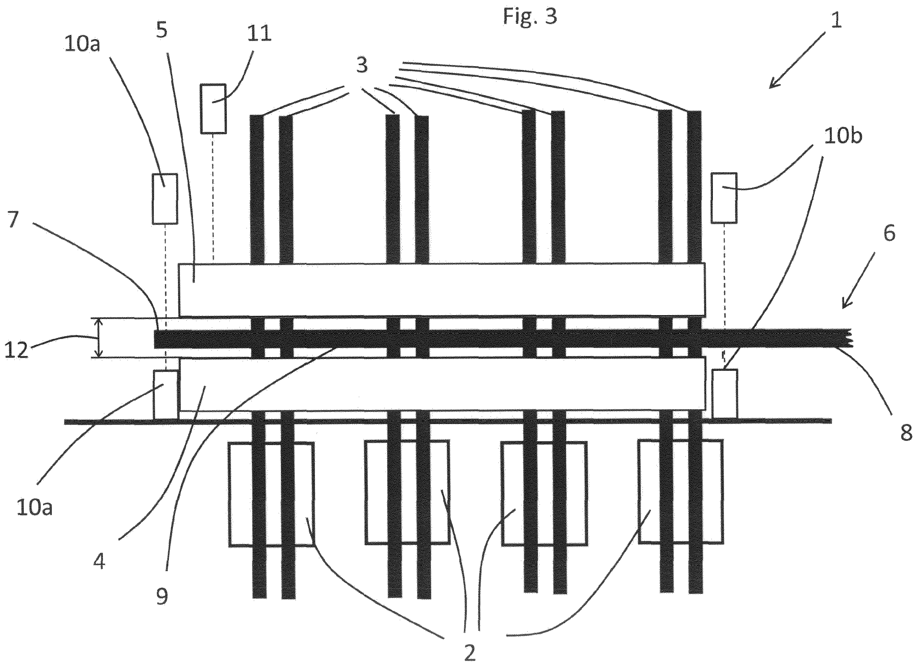

Die Figuren 3 und 4 zeigen die Vorrichtung in verschiedenen Öffnungszuständen. In Fig. 3 ist die Presse in Arbeitsstellung geöffnet, sodass der Fördergurt 6 zwischen den Pressplatten 4 und 5 hindurch ziehbar ist. Der innere Abstand 12 der Pressplatten 4 und 5 ist so eingestellt, dass der Fördergurt 6 nur gerade eben mit geringem Spiel zwischen den Pressplatten 4 und 5 bewegbar ist.

In Fig. 4 ist die Presse 1 in Wartungsstellung vollständig geöffnet dargestellt.

Gemäß dem erfindungsgemäßen Verfahren messen zunächst die Lichtschranken 10a und 10b, ob ein Fördergurtrohling 6, 8 zum Vulkanisieren in der Presse 1 vorhanden ist. Die Steuereinheit erfasst die Messwerte der Lichtschranken 10a und 10b. Ist kein Fördergurt 6 vorhanden, steuert die Steuereinheit die Hubzylindereinheiten 2, wobei diese das Pressenoberteil 5 in oberste Position anheben. Die Presse 1 steht nun gemäß Fig. 4 für Wartungsarbeiten oder das Einfädeln eines neuen Fördergurtrohlings offen.

Ist ein Fördergurtrohling 6, 8 in die Presse eingeführt, messen dies die Lichtschranken 10a und 10b. Die Messwerte werden von der Steuereinheit erfasst, die Hubzylindereinheiten 2 bewegen die Pressplatten 4 und 5 in Schließlage gemäß Fig. 2. Der Fördergurtrohling 6, 8 wird nun auf bekannte Weise vulkanisiert. Nach Ende der Vulkanisation messen die Lichtschranken 10a und 10b erneut, ob ein Fördergurtrohling 6, 8 zum Vulkanisieren in der Presse 1 vorhanden ist. Ist dies der Fall, steuert die Steuereinheit die Hubzylindereinheiten 2, das Pressenoberteil 5 wird in Betriebsstellung gemäß Fig. 3 geöffnet. Der Fördergurtrohling 6 kann nun um eine Zykluslänge weitergezogen werden.

Ist kein Fördergurtrohlings 6, 8 mehr zur Vulkanisation in der Presse 1 vorhanden, wird über die Steuerung und die Hubzylindereinheiten 2 die Presse in Wartungsstellung gemäß Fig. 4 vollständig geöffnet. Das Verfahren kann dann neu beginnen.

### Bezugszeichenliste

### (Teil der Beschreibung)

- 1: Vulkanisationspresse
- 2: Hydraulikzylindereinheiten
- 3: Hydraulikzylinder, Hubzylinder
- 4: Pressentisch, Pressplatte
- 5: Pressenoberteil, Pressplatte
- 6: Fördergurt
- 7, 8, 9: Bereiche des Fördergurtes 6
- 10a: Lichtschranke am Pressenauslauf
- 10b: Lichtschranke am Presseneinlauf
- 11: Abstandsmesseinrichtung
- 12: innerer Abstand der Pressplatten 4, 5

## Patentansprüche

1. Verfahren zur Herstellung von Fördergurten (6) in einer Vorrichtung mit einer Vulkanisationspresse (1) mit einer Einlaufseite und einer Auslaufseite, wobei die Vulkanisationspresse (1) ein Pressenoberteil (5) und ein Pressenunterteil (4) umfasst, wobei das Pressenoberteil (5) und das Pressenunterteil (4) jeweils eine Pressplatte 4, 5) aufweisen, die am jeweiligen Pressenteil (4, 5) befestigbar sind und planparallel zueinander angeordnet sind, wobei das Pressenoberteil (5) gegen das Pressenunterteil (4) senkrecht zur Plattenebene mittels einer Hubeinrichtung (2, 3) gegeneinander zu beabstanden ist,
**dadurch gekennzeichnet, dass** das Verfahren folgende Arbeitsschritte umfasst, nämlich
a Prüfen, ob ein Fördergurtrohling (6, 7, 8, 9) zum Vulkanisieren in der Presse vorhanden ist und Übergabe der Information an eine Auswerte- und Steuereinheit,
b falls kein Fördergurtrohling (6, 7, 8, 9) zum Vulkanisieren in der Presse (1) vorhanden ist, steuert die Steuereinheit die Hubeinrichtung (2, 3) so, dass die Presse (1) vollständig geöffnet wird und ein Fördergurtrohling (6, 7, 8, 9) einfädelbar ist,
c falls ein Fördergurtrohling (6, 7, 8, 9) zum Vulkanisieren in der Presse (1) vorhanden ist, steuert die Steuereinheit die Hubeinrichtung (2, 3) so, dass die Presse (1) in eine vorbestimmte Betriebsöffnungsposition öffnet, wobei in der Betriebsöffnungsposition der Abstand der Pressplatten geringer ist, als bei vollständiger Öffnung der Presse,
d Einziehen des Fördergurtes (6, 7, 8, 9) in die Presse (1) um eine vorbestimmte Länge
e Absenken des Pressenoberteils (5) gegen das Unterteil (4) mittels der Hubeinrichtung (2, 3), dabei steuert die Steuerung den Verfahrweg in Abhängigkeit von der gemessenen Fördergurtrohlingsdicke,
f Vulkanisieren
g Prüfen, ob ein Fördergurtrohling (6, 7, 8, 9) zum Vulkanisieren in der Presse (1) vorhanden ist und Übergabe der Information an die Auswerte- und Steuereinheit,
h falls ein Fördergurtrohling (6, 7, 8, 9) zum Vulkanisieren in der Presse (1) vorhanden ist, wird das Verfahren bei Schritt c fortgesetzt
i falls kein Fördergurtrohling (6, 7, 8, 9) zum Vulkanisieren in der Presse (1) vorhanden ist, steuert die Steuereinheit die Hubeinrichtung (2, 3) so, dass die Presse (1) vollständig geöffnet wird, der fertig vulkanisierte Fördergurt (6) wird entnommen und kann von Neuem beginnen.

2. Vorrichtung zur Durchführung des oben genannten Verfahrens, wobei die Vorrichtung eine Vulkanisationspresse (1) mit einer Einlaufseite und einer Auslaufseite aufweist, wobei die Vulkanisationspresse (1) ein Pressenoberteil (5) und ein Pressenunterteil (4) umfasst, wobei das Pressenoberteil (5) und das Pressenunterteil (4) jeweils eine Pressplatte 4, 5) aufweisen, die am jeweiligen Pressenteil (4, 5) befestigbar sind und planparallel zueinander angeordnet sind, wobei das Pressenoberteil (5) gegen das Pressenunterteil (4) senkrecht zur Plattenebene mittels einer Hubeinrichtung (2, 3) gegeneinander zu beabstanden ist,
**dadurch gekennzeichnet, dass** die Vorrichtung eine Steuerung und Messmittel aufweist, wobei durch ein erstes und/oder ein zweites Messmittel (10a, 10b) prüfbar ist, ob ein Fördergurtrohling (6, 7, 8, 9) zum Vulkanisieren in der Presse (1) vorhanden ist und durch ein oder mehrere weitere Messmittel (11) der Abstand (12) der Pressplatten (4, 5) der Vorrichtung zueinander messbar ist und durch die Steuerung die Meßsignale erfassbar sind, wobei durch die Steuerung die Hubvorrichtung (2, 3) derart ansteuerbar ist, dass mittels der Hubvorrichtung (2, 3) vorbestimmte Positionen der Pressplatten (4, 5) zueinander anfahrbar sind, wobei die vorbestimmten Positionen der Pressplatten voneinander verschieden, insbesondere eine vollständige Öffnung der Presse oder eine von der vollständigen Öffnung der Presse abweichende, kleinere Betriebsöffnung sein können.

## Claims

1. Method for producing conveyor belts (6) in a device having a vulcanizing press (1) having an infeed side and an outfeed side, wherein the vulcanizing press (1) comprises a press upper part (5) and a press lower part (4), wherein the press upper part (5) and the press lower part (4) have in each case one press plate (4, 5) which can be fastened to the respective press part (4, 5) and are disposed so as to be mutually plane-parallel, wherein the press upper part (5) and the press lower part (4) by means of a lifting installation (2, 3) are to be mutually spaced apart perpendicularly to the plate plane, **characterized in that** the method comprises the following method steps:
a) checking whether a conveyor belt blank (6, 7, 8, 9) for vulcanizing is present in the press, and transmitting the item of information to an evaluation and control unit;
b) if no conveyor belt blank (6, 7, 8, 9) for vulcanizing is present in the press (1), the control unit controls the lifting installation (2, 3) such that the press (1) is completely opened and a conveyor belt blank (6, 7, 8, 9) is able to be threaded in;
c) if a conveyor belt blank (6, 7, 8, 9) for vulcanizing is present in the press (1), the control unit controls the lifting installation (2, 3) such that the press (1) opens in a predetermined operational opening position, wherein the spacing of the press plates in the operational opening position is smaller than in the case of a completely opened press;
d) drawing the conveyor belt (6, 7, 8, 9) into the press (1) by a predetermined length;
e) lowering the press upper part (5) toward the lower part (4) by means of the lifting installation (2, 3), the controller herein controls the displacement path as a function of the measured thickness of the conveyor belt blank;
f) vulcanizing;
g) checking whether a conveyor belt blank (6, 7, 8, 9) for vulcanizing is present in the press (1), and transmitting the item of information to the evaluation and control unit;
h) if a conveyor belt blank (6, 7, 8, 9) for vulcanizing is present in the press (1), the method continues at step c);
i) if no conveyor belt blank (6, 7, 8, 9) for vulcanizing is present in the press (1), the control unit controls the lifting installation (2, 3) such that the press (1) is completely opened, the completely vulcanized conveyor belt (6) is retrieved, and the method can begin again.

2. Device for carrying out the method mentioned above, wherein the device has a vulcanizing press (1) having an infeed side and an outfeed side, wherein the vulcanizing press (1) comprises a press upper part (5) and a press lower part (4), wherein the press upper part (5) and the press lower part (4) have in each case one press plate (4, 5) which can be fastened to the respective press part (4, 5) and are disposed so as to be mutually plane-parallel, wherein the press upper part (5) and the press lower part (4) by means of a lifting installation (2, 3) are to be mutually spaced apart perpendicularly to the plate plane,
**characterized in that** the device has a controller and measuring means, wherein it is able to be checked by a first and/or a second measuring means (10a, 10b) whether a conveyor belt blank (6, 7, 8, 9) for vulcanizing is present in the press (1), and the mutual spacing (12) of the press plates (4, 5) of the device is able to be measured by one or a plurality of further measuring means (11), and the measuring signals are able to be detected by the controller, wherein the lifting device (2, 3) is able to be actuated by the controller in such a manner that predetermined mutual positions of the press plates (4, 5) are able to be reached by means of the lifting device (2, 3), wherein the predetermined positions of the press plates may be different from one another, in particular may be a complete opening of the press or a smaller operational opening that deviates from the complete opening of the press.

## Revendications

1. Procédé de fabrication de bandes transporteuses (6) dans un dispositif comprenant une presse de vulcanisation (1) pourvue d'un côté entrée et d'un côté sortie, la presse de vulcanisation (1) comprenant une partie de presse supérieure (5) et une partie de presse inférieure (4), la partie de presse supérieure (5) et la partie de presse inférieure (4) comportant chacune une plaque de presse (4, 5), lesquelles plaques peuvent être fixées à la partie de presse respective (4, 5) et sont disposées parallèlement les unes aux autres dans un plan, la partie de presse supérieure (5) étant espacée de la partie de presse inférieure (4) perpendiculairement au plan des plaques à l'aide d'un dispositif de levage (2, 3),
**caractérisé en ce que** le procédé comprend les étapes de travail suivantes, à savoir
a vérifier si une ébauche de bande transporteuse (6, 7, 8, 9) destinée à la vulcanisation est présente dans la presse et transférer l'information à une unité d'évaluation et de commande,
b si aucune ébauche de bande transporteuse (6, 7, 8, 9) destinée à la vulcanisation n'est présente dans la presse (1), l'unité de commande commande le dispositif de levage (2, 3) de sorte que la presse (1) soit complètement ouverte et qu'une ébauche de bande transporteuse (6, 7, 8, 9) puisse être insérée,
c si une ébauche de bande transporteuse (6, 7, 8, 9) destinée à la vulcanisation est présente dans la presse (1), l'unité de commande commande le dispositif de levage (2, 3) de sorte que la presse (1) s'ouvre dans une position d'ouverture de fonctionnement prédéterminée, la distance entre les plaques de presse étant plus petite en position d'ouverture de fonctionnement que lorsque la presse est complètement ouverte,
d insérer la bande transporteuse (6, 7, 8, 9) dans la presse (1) sur une longueur prédéterminée,
e abaisser la partie de presse supérieure (5) contre la partie inférieure (4) à l'aide du dispositif de levage (2, 3), la commande commandant le trajet de déplacement en fonction de l'épaisseur mesurée de l'ébauche de bande transporteuse,
f vulcaniser,
g vérifier si une ébauche de bande transporteuse (6, 7, 8, 9) destinée à la vulcanisation est présente dans la presse (1) et transmettre l'information à l'unité d'évaluation et de commande,
h si une ébauche de bande transporteuse (6, 7, 8, 9) destinée à la vulcanisation est présente dans la presse (1), le processus se poursuit à l'étape c
i si aucune ébauche de bande transporteuse (6, 7, 8, 9) destinée à la vulcanisation n'est présente dans la presse (1), l'unité de commande commande le dispositif de levage (2, 3) de sorte que la presse (1) soit complètement ouverte, la bande transporteuse entièrement vulcanisée (6) est retirée et le processus peut recommencer.

2. Dispositif de mise en œuvre du procédé susmentionné, le dispositif comportant une presse de vulcanisation (1) pourvue d'un côté entrée et d'un côté sortie, la presse de vulcanisation (1) comprenant une partie de presse supérieure (5) et une partie de presse inférieure (4), la partie de presse supérieure (5) et la partie de presse inférieure (4) comportant chacune une plaque de presse (4, 5), lesquelles plaques peuvent être fixées à la partie de presse respective (4, 5) et sont disposées parallèlement les unes aux autres dans un plan, la partie de presse supérieure (5) étant espacée de la partie de presse inférieure (4) perpendiculairement au plan des plaques à l'aide d'un dispositif de levage (2, 3),
**caractérisé en ce que** le dispositif comporte une commande et des moyens de mesure, un premier et/ou un deuxième moyens de mesure (10a, 10b) pouvant vérifier si une ébauche de bande transporteuse (6, 7, 8, 9) destinée à la vulcanisation est présente dans la presse (1) et un ou plusieurs autres moyens de mesure (11) pouvant mesurer la distance (12) entre les plaques de presse (4, 5) du dispositif et la commande pouvant détecter les signaux de mesure, la commande pouvant commander le dispositif de levage (2, 3) de telle sorte que des positions prédéterminées des plaques de presse (4, 5) puissent être rapprochées les unes des autres à l'aide du dispositif de levage (2, 3), les positions prédéterminées des plaques de presse pouvant être différentes les unes des autres, en particulier pouvant être une ouverture complète de la presse ou une ouverture de fonctionnement plus petite différente de l'ouverture complète de la presse.
